# EUROPÄISCHE PATENTSCHRIFT

(11) **EP 1 617 783 B1**
(45) Veröffentlichungstag und Bekanntmachung des Hinweises auf die Patenterteilung: **20.05.2009**
(21) Anmeldenummer: 04738475.5
(22) Anmeldetag: 26.04.2004
(51) Int. Cl.: A61C 8/00

(54) **ZAHNIMPLANTAT**
DENTAL IMPLANT
IMPLANT DENTAIRE

(30) Priorität: 25.04.2003 DE 10319036
(43) Veröffentlichungstag der Anmeldung: 25.01.2006
(73) Patentinhaber: Z-Systems Schweiz AG, 4702 Oensingen (CH)
(72) Erfinder: VOLZ, Ulrich, 88709 Meersburg (DE)
(74) Vertreter: Frei, Alexandra Sarah
(86) Internationale Anmeldenummer: PCT/DE2004/000868
(87) Internationale Veröffentlichungsnummer: WO 2004/096075

(56) Entgegenhaltungen:
- EP-A- 0 313 222
- WO-A-02/24098
- WO-A-03/013385
- FR-A- 2 769 207
- US-A- 5 642 996

## Beschreibung

Die Erfindung betrifft ein Zahnimplantat nach dem Oberbegriff des Anspruchs 1.

### Stand der Technik

Zahnimplantate werden als Zahnwurzelersatz nach Zahnverlust z.B. zur Aufnahme von fest zementierten Zahnkronen und Brücken sowie Suprastrukturen für die Verankerung von abnehmbaren Zahnprothesen verwendet.

Aus dem deutschen Gebrauchsmuster G 93 06 758.5 ist ein Zahnimplantat aus Glaskeramik für den Zahnwurzelersatz bekannt, das einen Grundkörper mit vier Abschnitten aufweist. Zwei Abschnitte sind für die Verankerung im Knochen vorgesehen, wobei einer dieser Abschnitte ein Gewinde trägt. Ein dritter darauffolgender Abschnitt stellt ein Übergangsbereich in der Mundschleimhaut dar. Der vierte Abschnitt ist im implantierten Zustand außerhalb des Kiefers angeordnet und dient zur Aufnahme einer Zahnkrone bzw. von zahntechnischen Konstruktionen für einen Zahnersatz.

Glaskeramik hat den Vorteil, dass sie im Vergleich zu Titanimplantaten besser nach einer Implantation einheilt. Des Weiteren kann Glaskeramik zahnfarben ausgeführt werden, so dass die Zahnimplantate unter Kronen und dem Zahnfleisch Weiteren kann Glaskeramik zahnfarben ausgeführt werden, so dass die Zahnimplantate unter Kronen und dem Zahnfleisch nicht dunkel hervorschimmern. Aufgrund der Einstückigkeit ist der über das Zahnfleisch herausstehende Abschnitte zum Aufbringen einer Zahnkrone nach dem Einwachsen des Zahnimplantats vergleichsweise rotationsstabiler. Des Weiteren kann Glaskeramik nachträglich im implantierten, eingewachsenen Zustand bearbeitet, z.B. geschliffen werden. Damit lassen sich individuelle Stumpfformen realisieren.

Nachteilig ist jedoch bei Glaskeramik die mit unter nicht ausreichende Bruchstabilität.

Die US Patentschrift 5,642,996 offenbart ein Zahnimplantat aus Keramik wie Zirkonoxid oder Aluminiumoxid mit einem Gewindestück und einem Kragenstück. Das Gewindestück weist eine rauhe Oberfläche und ein selbstschneidendes Gewinde auf. Das Kragenstück ist in der Form eines Kegelstumpfes fakultativ mit aufgesetztem Zylinder offenbart. Der Übergang vom Kragenstück zum Pfosten ist eckig.

Die Publikation WO 03/013385 offenbart ein Zahnimplantat, bei welchem ein Metallkern mit einem keramischen Mantel fest verklebt wird. Der keramische Mantel kann aus Zirkon bestehen und bildet eine Erweiterung in der Form eines Kegelstumpfes.

Die Publikation WO 02/24098 offenbart ein einstückiges Zahnimplantat ohne Gewinde aus Zirkonoxid. Auf einer Erweiterung mit Kegelstumpf-Formen wird ein Pfosten relativ zum Grundkörper in verschiedenen Winkeln aufgesetzt.

### Aufgabe und Vorteile der Erfindung

Der Erfindung liegt die Aufgabe zugrunde, ein Zahnimplantat bereitzustellen, das neben den genannten Vorteilen von Glaskeramik insbesondere eine verbesserte Stabilität besitzt, und eine mangelhafte Verbindung zwischen knochen und Implantat verhindert.

Diese Aufgabe wird durch die Merkmale des Anspruchs 1 gelöst.

In den Unteransprüchen sind vorteilhafte und zweckmäßige Weiterbildungen der Erfindung beschrieben.

Die Erfindung geht von einem Zahnimplantat aus, das einen Grundkörper aufweist, der ein Gewindestück zum Verschrauben und Einwachsen in den Kieferknochen sowie einen nach dem Einwachsen im Kiefer aus dem Zahnfleisch herausragenden Pfosten umfasst, der zur Aufnahme einer Sekundärstruktur, insbesondere einer Zahnkrone, Prothese oder Stegverbindung dient, wobei der Grundkörper einstückig ist. Der einstückige Grundkörper besteht zumindest weitgehend, ggf. vollständig aus Zirkonoxid oder einer Zirkonoxid/Aluminiumoxid-Mischung. Zirkonoxid bzw. eine Mischung aus Zirkonoxid und Aluminiumoxid hat neben den Vorteilen einer Herstellbarkeit in Zahnfarbe und einer Beschleifbarkeit, eine vergleichsweise hohe Festigkeit. Außerdem hat es sich herausgestellt, dass ein Zahnimplantat aus diesen Materialien ein mindestens vergleichbar gutes Einwachsverhalten wie Glaskeramik oder Titan zeigt. Bei einer Mischung von Zirkonoxid (z.B. ZrO₂) und Aluminiumoxid (z.B. Al₂O₃) liegt der Anteil von Zirkonoxid bevorzugt bei ca. 75% und der Anteil von Aluminiumoxid z.B. bei ca. 20%. Sowohl bei der Mischung als auch bei einem Implantat das überwiegend aus Zirkonoxid besteht, ist es darüber hinaus vorteilhaft, wenn ein Anteil von ca. 5% eines weiteren Oxide, z.B. Yttriumoxid (Y₂O₂) beigefügt ist.

Der kern der Erfindung liegt nun darin, dass zwischen Gewindestück und Pfosten ein tulpenförmig über den Gewindedurchmesser auskragendes Zwischenstück angeordnet. Durch den tulpenförmigen Kragen kann sich das Zahnimplantat im Zahnfleisch und ggf. dem Kieferknochen über eine vergleichsweise größere Fläche adaptieren, wie ein herkömmliches Implantat, so dass der Durchmesser des Implantates im Zahnfleisch-Durchtrittsbereich wesentlich erhöht ist. Dadurch ist eine ästhetische und anatomisch korrekte Gestaltung einer Sekundärkrone möglich, da deren Durchmesser weit über dem des Gewindeabschnittes liegt. Außerdem erfolgt beim Eindrehen eine Art Kompression im Kragenbereich, welche zu einer vollständigen Abdichtung führt und das Einwachsen von Epithel und damit eine mangelhafte Verbindung zwischen Implantat und Kochen verhindert. Weiterhin wird durch die Verbreitung die Gefahr eines Implantatbruches reduziert.

Für eine merkbare Abstützwirkung sollte der Durchmesser der Auskragung mindestens 10%, besser 40% über dem Durchmesser des Grundkörpers im Gewindebereich liegen. Beispielsweise ist der Durchmesser der Auskragung ungefähr 50% größer als der Gewindedurchmesser.

In einer besonders bevorzugten Ausgestaltung der Erfindung weist der Pfosten einen konischen Abschnitt, insbesondere über einen beträchtlichen Teil, z.B. größer als 50% seiner Länge auf. Dies hat den Vorteil, dass sich eine Krone leichter stabil auf einen Stumpf durch eine Klemmwirkung bei Aufschieben der Krone auf den Konus verankern lässt. Dies ist insbesondere dann der Fall, wenn der Pfosten vom Zwischenstück an konisch zuläuft und z.B. lediglich an einem Endbereich eine Struktur aufweist, die die Aufnahme eines Eindrehwerkzeugs erlaubt. Vorteilhafterweise ist lediglich ein kurzer Abschnitt des Endbereichs des Pfostens als Sechseck ausgestaltet. Es sind jedoch auch eine Vielzahl weiterer Strukturen am Ende des Pfostens möglich, z.B. negative Schlitz- oder Kreuzstrukturen.

Ein konischer oder sich verjüngender Abschnitt des Pfostens besitzt einen noch weiteren wichtigen Vorteil. Regelmäßig werden die Formen für Kronen und Brücken über einen Abdruck eines vorbereiteten Zahnstumpfs oder eines Implantats beim Patienten erhalten. Auf der Grundlage des Abdrucks lässt sich ein Gipsmodell erstellen, anhand dessen eine passende Zahnkrone oder Brücke gefertigt wird. Bei einem neuerdings eingesetzten Verfahren wird ebenfalls ein Abdruck beim Patienten erstellt. Anschließend findet aber eine Laserabtastung zur Ermittlung der Passform statt. Mit den daraus erhaltenen Daten wird dann unmittelbar eine Zahnkrone oder Brücke gefräst. Dieser Vorgang wird im Fachjargon der Zahnärzte bzw. Zahntechniker mit CAD/CAM-Verfahren bezeichnet. CAD steht für "computer added design", CAM für "computer added manufacturing". Bei diesem Verfahren muss berücksichtigt werden, dass mit gängigen Fräsmaschinen Brücken und Kronen nicht in beliebiger Form herstellbar sind. Bei einem zumindest weitgehend konischen Pfosten ist die entsprechende Kavität in einer Krone oder Brücke ebenfalls konisch. Eine solche Form kann im CAD/CAM-Verfahren für insbesondere einen Neigungswinkel der Flanken von 4° und größer sicher realisiert werden.

Im Weiteren ist es besonders vorteilhaft, wenn ein Übergang in den Pfosten, insbesondere ausgehend vom Zwischenstück über eine Hohlkehle erfolgt. Durch das Vermeiden von all zu kantigen Übergängen wird einerseits bei Belastung eine Kerbwirkung mit der möglichen Konsequenz eines Materialbruchs vermieden und andererseits eine maschinelle Herstellung dazu passender Kronen und Brücken durch gängige CAD/CAM-Verfahren ermöglicht. Vorzugsweise besitzt die Hohlkehle einen Radius von insbesondere nicht kleiner als 0,4 mm. Vor der Hohlkehle und dem Pfosten ist ein z.B. kreisringförmiger zur Längsachse senkrecht oder ein im Wesentlichen senkrecht verlaufender Absatz bevorzugt, der eine Breite von ca. 0,4 mm oder größer besitzt. Weiterhin können über einen derart ausgestalteten Absatz bei der Anwendung von mehreren Implantaten Pfeilerdivergenzen ohne Beschleifen des Pfostens größtenteils ausgeglichen werden.

Außerdem wird die Stabilität der Sekundärkrone durch den damit möglichen dicken Kronenrad deutlich erhöht.
Ein solcher Absatz kann mit einem Scanner bei einem CAD/CAM-Verfahren mit der gewünschten Genauigkeit erfasst werden. Nach der Hohlkehle ist es vorteilhaft, wenn der Pfosten sich ohne Überhang günstigerweise verjüngend anschließt. Für ein definiertes und vergleichsweise einfaches Implantieren des Zahnimplantats wird im Weiteren vorgeschlagen, dass sich das Gewindestück bis zu dem am Pfosten gegenüberliegenden Ende des Grundkörpers erstreckt. In diesem Zusammenhang ist es außerdem bevorzugt, wenn sich das Gewindestück am Ende des Grundkörpers verjüngt, z.B. konisch verjüngt. Dadurch kann das Implantat besser in die Bohrung eingeführt werden.

Um den Einsetzvorgang des Implantats weiter zu begünstigen, wird überdies vorgeschlagen, dass am Ende des Grundkörpers ein Gewinde des Gewindestücks durch sich längs erstreckende Ausnehmungen unterbrochen ist. Vorzugsweise vertiefen sich die Ausnehmungen bis zum Ende des Grundkörpers auf der Gewindestückseite von einer Startstelle an in einer Weise, dass am Ende des Gewindestücks im Querschnitt betrachtet eine Art Kreuzstruktur entsteht. In den Ausnehmungen kann beim Implantieren Knochen aufgenommen werden, der dadurch den Schneidvorgang des übrigen Gewindes nicht beeinträchtigt. Die sich längs erstreckenden Ausnehmungen haben verglichen mit einem herkömmlichen Gewindeschneider somit die Funktion einer Art Spannut. Außerdem wird in der Einheilphase des Implantats durch Einwachsen von Knochen in diesem Bereich eine mechanische Ausdrehsicherung erzeugt.

### Ausführungsbeispiel

Ein Ausführungsbeispiel der Erfindung ist in den Zeichnungen dargestellt und unter Angabe weiterer Vorteile und Einzelheiten näher erläutert. Es zeigen
- Figur 1: ein Zahnimplantat in Seitenansicht;
- Figur 2: eine Unteransicht des Zahnimplantats nach Figur 1;
- Figur 3: einen Schnitt durch das Zahnimplantat nach Figur 1 entlang der Schnittlinie aₐ in Figur 1;
und
- Figur 4: eine Detailansicht eines Gewindes eines Gewindestücks des Zahnimplantats nach Figur 1.

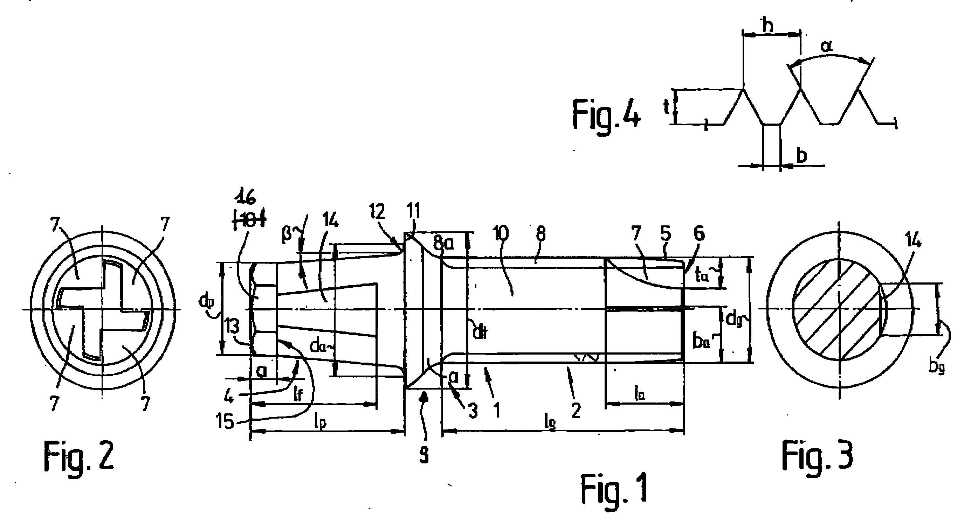

In den Figuren 1 bis 4 ist ein Zahnimplantat 1 dargestellt, das ein Gewindestück 2, ein Zwischenstück 3 sowie einen Pfosten 4 umfasst. Das Gewindestück 2, das Zwischenstück 3 und der Pfosten 4 sind konzentrisch zueinander positioniert und weitgehend rotationssymmetrisch. Das Gewindestück weist eine Länge l_{g} von hier beispielhaft 10 mm auf. Im vorderen Bereich 5 verjüngt sich das Gewindestück, um den Eindrehvorgang beim Implantieren zu begünstigen.

In Figur 4 ist die Geometrie eines bevorzugten Gewindes 8 im sich nicht verjüngenden Bereich vergrößert dargestellt. Es handelt sich um ein rechtsdrehendes Schneidegewindeprofil mit beispielhaft einer Ganghöhe h von 0,6 mm. Die Gangtiefe t beträgt 0,34 mm und der Flankenwinkel α 60°. Der Gang des Gewindes 8 ist als Trapezgang ausgebildet mit einer Gangbreite b von 0,18 mm am Fuß des Ganges.

Im vorderen Bereich 5 bis zum Ende 6 des Gewindestücks 2 sind im Gewindestück 2 sich vertiefende Ausnehmungen 7 (siehe auch Figur 2) vorgesehen. Die Ausnehmungen 7 haben im Querschnitt betrachtet eine Segmentform. Über eine Länge lₐ von beispielhaft 3,3 mm beginnen die Ausnehmungen am Außendurchmesser des Gewindes 8 und gehen im Längsschnitt betrachtet (siehe Figur 1) mit einem Radius r von hier 5 mm in das Material des Gewindestücks 2 bis zum Ende 6 des Gewindestücks 2. Der Radius r führt zu einer Ausnehmung mit einer Tiefe tₐ von z.B. 1,2 mm am Ende 6 des Gewindestücks 2.

Dabei verläuft die Ausnehmung nicht über den vollständigen Durchmesser dg des Gewindestücks (dg z.B. 4 mm), sondern hat eine Breite bₐ in der Seitenansicht betrachtet von etwas mehr als dem Radius des Gewindestücks 2, z.B. 2,1 mm.

Das Gewindestück 2 geht über das Zwischenstück 3 mit einer tulpenförmigen Erweiterung 9 in den Pfosten 4 über. Die tulpenförmige Erweiterung 9 setzt hier beispielhaft am Gewindeansatz 8a an und kragt in einer leichten S-Kurve bis auf einen Durchmesser dₜ im Ausführungsbeispiel von 6 mm aus. Anschließend ist die tulpenförmige Erweiterung 9 durch einen zur Längsachse 10 des Implantats 1 senkrecht verlaufenden kreisringförmigen Absatz 11 zurückgesetzt und geht dann ab einem Durchmesser dₐ von hier beispielhaft 5,12 mm in eine Hohlkehle 12 des Pfostens 4 über. Der Pfosten 4 besitzt eine Länge lp (hier beispielhaft 6,3 mm) und läuft von der Hohlkehle 12 an konisch zu bis er bei einem Abstand a (von z.B. 1 mm) vor seinem Ende 13 einen Durchmesser dp von z.B. 3,4 mm erreicht hat. Der Konuswinkel β des Pfostens 4 beträgt beispielsweise 5°.

Für eine bessere Handhabung des Implantats 1 und zuverlässigere Verankerung einer Zahnkrone, insbesondere im Hinblick auf eine Verdrehung der Zahnkrone, besitzt der Pfosten 4 eine Abflachung 14 (siehe auch Figur 3). Diese erstreckt sich über einen wesentlichen Teil des Konus, z.B. vom Ende 15 des Konus in Richtung tulpenförmige Erweiterung 9 bis zu einer Länge lp des Pfostens 4. Dort hat die Abflachung beispielsweise eine Breite b_{f} von 2 mm.

Am Ende 15 des konusförmigen Abschnitts des Pfosten 4 im Ausführungsbeispiel ist eine Sechskantmutter 16 aufgesetzt, um mit einem entsprechenden Eindrehwerkzeug (Ratsche) das Implantat 1 in eine vorbereitete Bohrung im Kieferknochen eindrehen zu können.

Der Eindrehvorgang wird durch den abnehmenden Durchmesser des Gewindes 8 im Bereich 5 sowie durch die Ausnehmungen 7 begünstigt, die eine Art "Spannuten" bilden, so dass sich abgeschabtes Material dicht zwischen Bohrung und Implantat 1 verklemmen kann. Am vorderen Ende 6 hat das Implantat 1 durch die Ausnehmungen 7 eine Art Kreuzform (siehe Figur 2), so dass auch dadurch der Einsetzvorgang in eine vorbereitete Bohrung im Kieferknochen erleichtert wird. Erst von einem Abstand lₐ vom Ende des Implantats 1 an ist das Gewinde 8 dann vollständig ausgebildet.

### Bezugszeichenliste

- 1: Zahnimplantat
- 2: Gewindestück
- 3: Zwischenstück
- 4: Pfosten
- 5: vorderer Bereich
- 6: Ende
- 7: Ausnehmung
- 8: Gewinde
- 8a: Gewindeansatz
- 9: tulpenförmige Erweiterung
- 10: Längsachse
- 11: kreisringförmiger Absatz
- 12: Hohlkehle
- 13: Ende
- 14: Abflachung
- 15: Ende
- 16: Sechskantmutter

## Patentansprüche

1. Zahnimplantat (1) bestehend aus einem Grundkörper mit einem Gewindestück (2) zum Verschrauben und Einwachsen in einen Kieferknochen sowie einem nach dem Einwachsen im Kieferknochen aus dem Zahnfleisch herausragenden Pfosten (4), der zur Aufnahme einer Zahnkrone dient, wobei der Grundkörper einstückig ist und zumindest weitgehend aus Zirkonoxid oder einer Zirkonoxid /Aluminiumoxid- Mischung besteht, **dadurch gekennzeichnet, dass** zwischen dem Gewindestück (2) und dem Pfosten (4) ein Zwischenstück (3) als tulpenförmige Erweiterung ausgebildet ist, die am Gewindestück (2) ansetzt, in einer S-Kurve auskragt und einen kreisringförmigen Absatz bildet, der über eine Hohlkehle in den Pfosten übergeht.

2. Zahnimplantat nach Anspruch 1, **dadurch gekennzeichnet, dass** der Durchmesser dₜ der Auskragung um mindestens 10% grösser ist als der Aussendurchmesser d_{g} des Gewindestückes (2).

3. Zahnimplantat nach einem der vorhergehenden Ansprüche, **dadurch gekennzeichnet, dass** der Pfosten (4) einen konischen Abschnitt aufweist.

4. Zahnimplantat nach Anspruch 2 oder 3, **dadurch gekennzeichnet, dass** der Pfosten (4) vom Zwischenstück (3) an einen konischen Abschnitt aufweist.

5. Zahnimplantat nach einem der vorhergehenden Ansprüche, **dadurch gekennzeichnet, dass** der Pfosten (4) mit einer Struktur (16) abschliesst, die die Aufnahme eines Eindrehwerkzeuges erlaubt.

6. Zahnimplantat nach einem der vorhergehenden Ansprüche, **dadurch gekennzeichnet, dass** das Gewindestück (2) bis zum Pfosten (4) gegenüberliegenden Ende (6) des Grundkörpers ausgebildet ist.

7. Zahnimplantat nach einem der vorhergehenden Ansprüche, **dadurch gekennzeichnet, dass** das Gewindestück (2) sich am Ende (6) des Grundkörpers verjüngt.

8. Zahnimplantat nach einem der vorhergehenden Ansprüche, **dadurch gekennzeichnet, dass** am Ende (6) des Grundkörpers ein Gewinde (8) des Gewindestücks (2) durch sich längs erstreckende Ausnehmungen (7) unterbrochen ist.

9. Zahnimplantat nach einem der vorhergehenden Ansprüche, **dadurch gekennzeichnet, dass** dem Zirkonoxid oder der Zirkonoxid/Aluminiumoxid Mischung ein Anteil von 5% Yttriumoxid beigefügt ist.

## Claims

1. Dental implant (1) comprising a base body having a threaded section (2) for screwing and being grown into a jawbone as well as a pin (4) protruding from the gum after the implant has been grown into the jawbone, which serves for taking up a dental crown, wherein said base body is a one-piece body and is at least to a large extent made of zirconium oxide or a mixture of zirconium oxide and aluminium oxide, **characterized in that** in-between the threaded section (2) and the pin (4) an intermediate piece (3) is designed to be a tulip-shaped widening, which commences at the threaded section (2) and extends outwards in an S-curve to form a circular shoulder, which, via a rounded corner merges into the pin.

2. Dental implant according to claim 1, **characterized in that** the diameter dₜ the collar-shaped widening is at least 10% greater than the external diameter dg of the threaded section (2).

3. Dental implant according to one of the preceding claims, **characterized in that** the pin (4) comprises a conical portion.

4. Dental implant according claim 2 or 3, **characterized in that** the pin (4) comprises a conical section commencing at the intermediate piece (3).

5. Dental implant according to one of the preceding claims, **characterized in that** the pin ends with a structure which permits engagement of a screwing instrument.

6. Dental implant according to one of the preceding claims, **characterized in that** the threaded section (2) extends to the end (6) of the base body, which is opposite to the pin (4).

7. Dental implant according to one of the preceding claims, **characterized in that** the threaded section (2) tapers at the end (6) of the base body.

8. Dental implant according to one of the preceding claims, **characterized in that** a thread (8) of the threaded section (2) is interrupted by longitudinally extending recesses (7) in a region the at the end (6) of the base body.

9. Dental implant according to one of the preceding claims, **characterized in that** a portion of 5% of yttrium oxide is added to the zirconium oxide or to the mixture of zirconium oxide and aluminium oxide.

## Revendications

1. Implant dentaire (1) constitué d'un corps de base doté d'une pièce filetée (2) qui permet le vissage et l'ancrage dans l'os de la mâchoire ainsi qu'une colonne (4) qui déborde de la gencive après l'ancrage dans l'os de la mâchoire et qui sert à reprendre une couronne dentaire, le corps de base étant réalisé d'un seul tenant et étant constitué au moins largement d'oxyde de zirconium ou d'un mélange d'oxyde de zirconium et d'oxyde d'aluminium,
**caractérisé en ce que**
une pièce intermédiaire (3) est formée entre la pièce filetée (2) et la colonne (4) sous la forme d'un évasement en forme de tulipe adjacent à la pièce filetée (2), en déborde suivant une courbe en S et forme un appendice en anneau circulaire qui se prolonge dans la colonne par un biseau creux.

2. Implant dentaire selon la revendication 1, **caractérisé en ce que** le diamètre dₜ de l'évasement est d'au moins 10 % plus grand que le diamètre extérieur dg de la pièce filetée (2).

3. Implant dentaire selon l'une des revendications précédentes, **caractérisé en ce que** la colonne (4) présente une partie conique.

4. Implant dentaire selon les revendications 2 ou 3, **caractérisé en ce que** la colonne (4) présente une partie conique qui part de la pièce intermédiaire (3).

5. Implant dentaire selon l'une des revendications précédentes, **caractérisé en ce que** la colonne (4) se termine par une structure (16) qui permet de reprendre un outil de vissage.

6. Implant dentaire selon l'une des revendications précédentes, **caractérisé en ce que** la pièce filetée (2) est formée jusqu'à l'extrémité (6) du corps de base non tournée vers la colonne (4).

7. Implant dentaire selon l'une des revendications précédentes, **caractérisé en ce que** la pièce filetée (2) se rétrécit à l'extrémité (6) du corps de base.

8. Implant dentaire selon l'une des revendications précédentes, **caractérisé en ce qu'**à l'extrémité (6) du corps de base, le filet (8) de la pièce filetée (2) est interrompu par des découpes (7) qui s'étendent dans le sens de sa longueur.

9. Implant dentaire selon l'une des revendications précédentes, **caractérisé en ce qu'**une proportion de 5 % d'oxyde d'yttrium est ajoutée à l'oxyde de zirconium ou au mélange d'oxyde de zirconium et d'oxyde d'aluminium.
